# FASCICULE DE BREVET EUROPEEN

(11) **EP 1 156 172 B1**
(45) Date de publication et mention de la délivrance du brevet: **01.03.2006**
(21) Numéro de dépôt: 01401231.4
(22) Date de dépôt: 14.05.2001
(51) Int. Cl.: E04B 9/16, E04F 13/08, F16B 2/24, E04B 9/20

(54) **Pince pour la liaison de fourrures appartenant à des ossatures différentes**
Klemme zur Verbindung von Komponenten verschiedener Stabwerke
Clamp for connecting component parts of different frames

(30) Priorité: 19.05.2000 FR 0006444
(43) Date de publication de la demande: 21.11.2001
(73) Titulaire: PLACOPLATRE, 92150 Suresnes (FR)
(72) Inventeur: Funten, Marc, 77290 Mitry Le Neuf (FR); Truquin, Patrick, 60340 Villers sous St Leu (FR)
(74) Mandataire: Santarelli

(56) Documents cités:
- EP-A- 0 494 122
- DE-A- 2 403 772
- FR-A- 2 779 467
- US-A- 3 433 121

## Description

La présente invention a pour objet une pince pour dispositif de liaison à pince et tige filetée, pour fourrures appartenant à des ossatures différentes.

Elle concerne d'une manière générale le doublage de murs, neufs ou non, pour isolation thermique ou acoustique, ou la suspension d'un faux-plafond à un quelconque plancher ; elle vise plus particulièrement le cas où un tel doublage ou une telle suspension met en oeuvre deux ossatures différentes formées chacune d'un réseau de fourrures parallèles, lesdites fourrures étant avantageusement croisées, c'est-à-dire établies perpendiculairement les unes aux autres d'une desdites ossatures à l'autre.

Il s'avère en effet que, dans certaines installations au moins, il est souhaitable, notamment pour minimiser les points d'ancrage dans le mur ou le plancher de prévoir successivement, pour l'isolation d'un mur ou la suspension d'un faux-plafond, deux ossatures, à savoir, une première ossature, ou ossature primaire, qui, formée de fourrures parallèles, est convenablement fixée au mur ou audit plancher, avec un nombre de points d'ancrage minimal, et une deuxième ossature, ou ossature secondaire, qui, elle-même formée de fourrures disposées orthogonalement par rapport aux précédentes, à un pas éventuellement différent de celui de celles-ci, est elle-même convenablement liée à cette ossature primaire, pour la fixation de plaques ou panneaux propres à la constitution d'un parement ou d'un faux-plafond.

Le plus souvent, en pratique, les fourrures mises en oeuvre pour la constitution de l'une et/ou de l'autre de ces ossatures sont des profilés et comportent chacune deux ailes munies de retours en équerre dirigés l'un vers l'autre le long de leur bord libre.

Le document FR-2 779 467 révèle un dispositif présentant un élément apte à venir en prise dans un premier profilé, et un autre élément pouvant venir en prise dans un second profilé. Ces deux éléments sont reliés par une tige, éventuellement filetée, formant entretoise et des moyens sont prévus sur l'un des éléments pour assurer un réglage en translation sur la tige.

La présente invention a d'une manière générale pour objet une pince pour dispositif de liaison de mise en oeuvre très simple et permettant la liaison, de place en place, de deux ossatures formées de telles fourrures, et, éventuellement, et c'est le cas dans une forme préférée de réalisation, la liaison de l'ensemble à un mur ou à un plancher.

La pince pour dispositif de liaison suivant l'invention, destiné à des fourrures appartenant à des ossatures différentes et comportant chacune deux ailes munies de retours en équerre dirigés l'un vers l'autre le long de leur bord libre, ladite pince portant un logement cylindrique par lequel elle peut être enfilée sur une tige filetée adaptée à être solidarisée à l'une des ossatures dite primaire, et étant munie de moyens pour son maintien axial sur la tige filetée, des moyens d'accrochage étant prévus sur ladite pince pour l'accrochage de l'autre ossature, dite secondaire, sur ladite pince, est caractérisée par le fait que la pince comprend un étrier et un levier, l'âme de l'étrier se prolongeant selon un retour à 180 degrés, le fond et le retour étant munis d'ouvertures en regard définissant le logement cylindrique et légèrement à distance l'un de l'autre, le levier étant inséré dans l'intervalle ainsi défini et portant les moyens de maintien axial sur la tige filetée.

Avantageusement, les moyens de maintien axial sur la tige filetée comprennent une ouverture constituée d'un tronçon de mise en place dans lequel la tige filetée peut passer librement et un tronçon guillotine débouchant dans le tronçon de mise en place et de forme semi-circulaire selon un diamètre correspondant au diamètre à fond de filet de la tige filetée.

De préférence, les ailes de l'étrier constituent des pattes d'accrochage pour les fourrures de l'ossature secondaire.

De préférence, l'étrier et le levier sont découpés dans un même flan et attachés l'un à l'autre jusqu'à mise en oeuvre de la pince élastique.

De préférence, le levier porte une patte perpendiculaire à son plan.

Avantageusement, le levier présente deux bords droits globalement perpendiculaires reliés par un arrondi, et le retour présente une tranche supérieure suivie d'un arrondi, lesdits arrondis étant adaptés à coopérer l'un avec le fond de la pliure du retour et l'autre avec la patte perpendiculaire du levier.

De préférence, l'arrondi du retour est suivi d'un bord libre globalement parallèle au fond de la pliure du retour, la patte perpendiculaire du levier étant adaptée à coopérer avec ce bord libre en position de blocage.

Avantageusement, le levier et l'étrier portent des empreintes complémentaires mises en coïncidence dans la position de blocage du levier.

La présente invention a également pour objet un dispositif de liaison, destiné à des fourrures appartenant à des ossatures différentes et comportant chacune deux ailes munies de retours en équerre dirigés l'un vers l'autre le long de leur bord libre, caractérisé par le fait qu'il comporte, en combinaison, d'une part, une tige filetée adaptée à être solidarisée à l'une des ossatures dite primaire et, d'autre part, une pince telle que ci-dessus.

Avantageusement, la tige filetée est fixée à l'âme d'un cavalier en forme de U dont les ailes sont agencées en sorte de pouvoir être assujetties aux fourrures de l'ossature primaire.

Pour mieux faire comprendre l'objet de l'invention, on va en décrire maintenant, à titre d'exemple, purement illustratif et non limitatif, des modes de réalisation représentés sur les dessins annexés.

Sur ces dessins :
- la figure 1 montre un dispositif de liaison selon l'invention ;
- la figure 2 est une vue en plan du flan découpé pour réalisation de la pince de la figure 1 ;
- la figure 3 est une vue de dessus de la pince de la figure 1, telle qu'elle est livrée, avant séparation du levier ;
- les figures 4 à 6 montrent les différentes phases de mise en oeuvre de la pince de la figure 1 associée à une tige filetée.

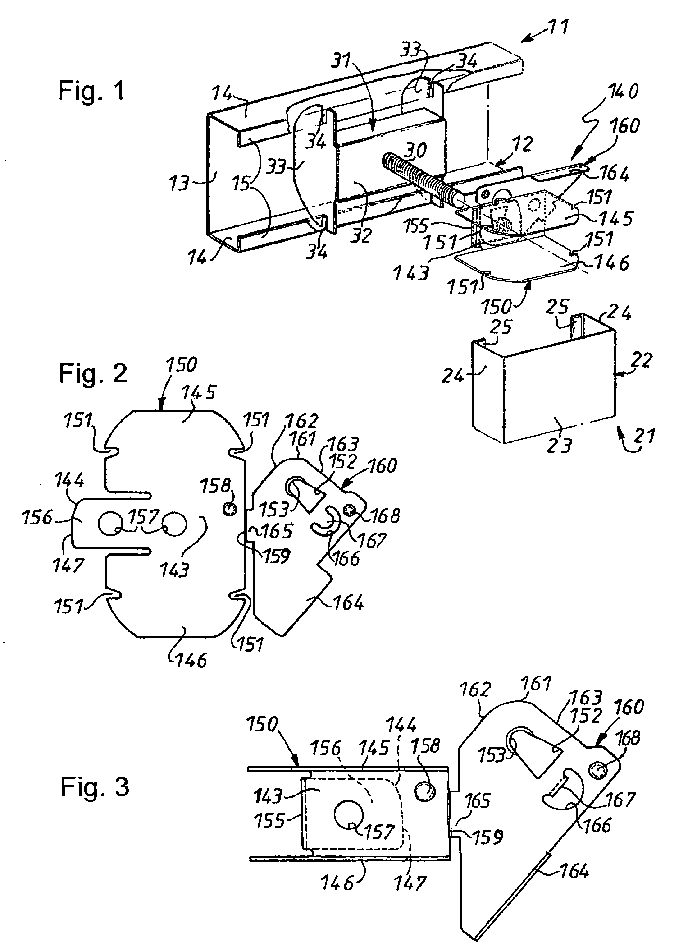

Tel qu'illustré par la figure 1, il s'agit de doubler un mur pour, par exemple, y assurer une isolation thermique.

Pour ce faire, sont mises en oeuvre, en deux couches différentes, d'une part, une ossature primaire 11, et, d'autre part, une ossature secondaire 21, lesdites ossatures 11, 21 étant chacune respectivement formées de fourrures parallèles 12, 22 disposées orthogonalement les unes aux autres, et donc croisées, d'une de ces ossatures 11, 21 à l'autre.

L'ossature primaire 11 est destinée à être fixée au mur à doubler, les fourrures primaires 12 s'étendant horizontalement, tandis que l'ossature secondaire 21 est destinée à recevoir un parement, les fourrures secondaires 21 s'étendant verticalement, l'espace compris entre le mur à doubler et le parement étant rempli d'un isolant, tel qu'un panneau de laine par exemple.

Dans la forme de mise en oeuvre illustrée sur la figure, les fourrures 12 et 22 constitutives des ossatures 11, 21 sont identiques entre elles, pour une simplification avantageuse des approvisionnements.

Il s'agit en pratique de profilés, réalisés par exemple par pliage aux galets, comportant un fond 13, 23 et deux ailes latérales 14, 24 munies de retours en équerre 15, 25 dirigés l'un vers l'autre le long de leur bord libre ; ici, les retours en équerre 15, 25 sont repliés sur eux-mêmes pour leur raidissement.

Les fourrures 12, 22 sont bien connues par elles-mêmes et ne seront pas décrites plus en détail ; il suffira de souligner que, globalement, elles ont en section transversale un profil en C qui s'inscrit dans un rectangle, les ailes latérales 14, 24 étant sensiblement perpendiculaires au fond 13, 23 qu'elles encadrent.

Les fourrures 12 constitutives de l'ossature primaire 11 sont disposées avec leur fond 13 plaqué contre le mur à doubler, lequel fond 13 est fixé audit mur ; les fourrures 22 constitutives de l'ossature secondaire 21 sont disposées avec leur fond 23 parallèle au mur à doubler et dirigé vers l'avant : c'est sur ce fond 23 qu'est rapporté et fixé le parement de doublage.

Selon l'invention, la liaison de l'ossature secondaire 21 à l'ossature primaire 11 se fait à l'aide de dispositifs de liaison.

Un tel dispositif de liaison comporte, en combinaison, une tige filetée 30 et une pince 140.

La tige filetée 30 est fixée par une de ses extrémités, par soudage ou par vissage, à l'âme 32 d'un cavalier 31 en forme de U ; les ailes 33 du cavalier 31 en U sont munies chacune d'échancrures 34 alignées débouchant latéralement dans lesquelles peuvent prendre place les retours en équerre 15 des fourrures primaires 12, lesdites ailes 33 ayant, au delà des échancrures 34, la forme en C de l'intérieur des fourrures primaires 12 ; grâce à cette disposition, le cavalier 31 est attelé de manière coulissante aux fourrures 12 de l'ossature primaire 11 ; il en est donc de même de la tige filetée 30.

Ici, la pince 140 est du type à levier 160.

Plus précisément, la pince 140 comprend un étrier 150 dont les deux ailes 145, 146 munies d'échancrures latérales 151 constituent les pattes d'accrochage pour les fourrures 22 de l'ossature secondaire 21 ; l'âme ou fond 143 qui relie partiellement les deux ailes 145, 146 se prolonge selon un retour 156 à 180 degrés ; le fond 143 et le retour 156 sont munis d'ouvertures 157 en regard définissant un logement cylindrique par lequel est enfilée aisément la tige filetée 30 ; le fond 143 et le retour 156 sont légèrement à distance l'un de l'autre en sorte que, dans cet intervalle ainsi défini, peut être inséré le levier 160.

Le levier 160 est muni d'une ouverture à deux tronçons, à savoir un tronçon de mise en place 152 dans lequel débouche un tronçon guillotine semi-circulaire 153 ; à la faveur d'une découpe 166, le levier 160 porte une patte 167, perpendiculaire à son plan, dont le rôle apparaîtra ci-après.

Pour faciliter le conditionnement de la pince 140, on préfère livrer celle-ci dans la forme représentée figure 3 ; l'ensemble étrier 150 - levier 160 étant réalisé à partir d'un même flan figure 2, le levier 160 reste solidaire de l'étrier 150 par l'intermédiaire d'une zone 165 de faible résistance cassable selon une ligne 159 ; cette cassure est réalisée sur le chantier au moment de la mise en oeuvre de la pince 140.

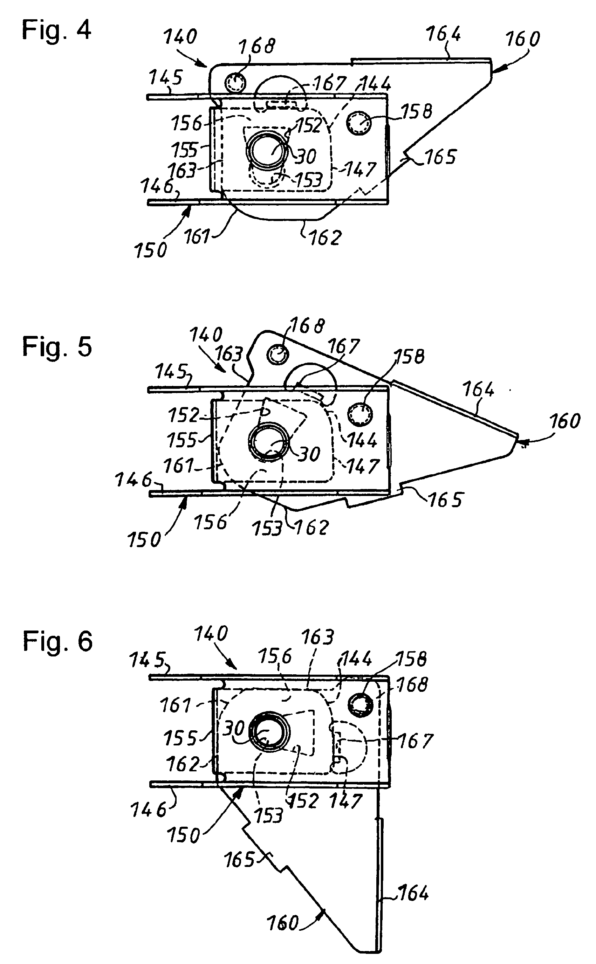

La mise en oeuvre d'une telle pince 140 est illustrée sur les figures 4 à 6.

Ainsi, l'opération de doublage d'un mur résulte de la description ci-dessus; après avoir fixé sur le mur l'ossature primaire 11 à fourrures 12 disposées horizontalement, et par exemple vissé la tige filetée 30 sur le cavalier 31, celui-ci est attelé par ses ailes 33 à fentes 34 à une fourrure 12 ; un panneau d'isolation est appliqué contre le mur et percé par la tige filetée 30.

Après séparation, le levier 160 est introduit verticalement entre le fond 143 et le retour 156 de l'étrier 150 jusqu'à ce que la patte 167 repose sur la tranche supérieure du retour 156, figure 4 ; dans cette position, l'un des bords droit 163 du levier 160 s'étend le long du fond 155 de la pliure du retour 156, les ouvertures 157 sont au droit du tronçon de mise en place 152 et la pince 140 est alors montée aisément sur la tige filetée 30.

Le levier 160 est alors tourné dans le sens horaire, par rapport aux figures, la préhension du levier 160 étant facilitée par la présence d'un rebord 164 à son extrémité.

Lors de cette rotation, ledit bord droit 163 étant suivi d'un arrondi 161 et la tranche supérieure du retour 156 également d'un arrondi 144, lesdits arrondis coopèrent l'un 161 avec le fond 155 de la pliure du retour 156, l'autre 144 avec la patte 167 en sorte que, figure 5, le tronçon guillotine 153 est amené progressivement en fond du filet de la tige filetée 30.

L'arrondi 161 du levier 160 est suivi d'un autre bord droit 162 perpendiculaire au premier bord droit 163 ; l'arrondi 144 du retour 156 est suivi d'un bord libre 147 qui est globalement perpendiculaire à sa tranche supérieure et parallèle au fond 155 de la pliure du retour 156, de sorte que, après rotation de 90 degrés du levier 160, figure 6, la patte 167 du levier 160 est en appui élastique sur ledit bord libre 147 et son autre bord droit 162 en appui sur le fond 155 de la pliure du retour 156 : comme on le voit, la pince 140 est alors immobilisée axialement par rapport à la tige filetée 30 ; cette position de blocage peut être affirmée par coopération d'un téton 168, par exemple embouti, du levier 160 avec une empreinte complémentaire 158 ménagée dans un endroit convenable du fond 143 de l'étrier 150.

On a décrit l'utilisation du dispositif de liaison selon l'invention au doublage d'un mur ou d'une cloison ; bien entendu, un tel dispositif peut être mis en oeuvre pour la pose de faux-plafonds ; il suffit de considérer qu'alors les ossatures primaire 11 et secondaire 21 s'étendent globalement horizontalement et non verticalement.

## Revendications

1. Pince pour dispositif de liaison destiné à des fourrures (12, 22) appartenant à des ossatures différentes (11, 21) et comportant chacune deux ailes (14, 24) munies de retours (15, 25) en équerre dirigés l'un vers l'autre le long de leur bord libre, ladite pince portant un logement cylindrique (157) par lequel elle peut être enfilée sur une tige filetée (30) adaptée à être solidarisée à l'une (11) des ossatures, dite primaire, et étant munie de moyens pour son maintien axial sur la tige filetée (30), des moyens d'accrochage (145-146) étant prévus sur ladite pince (140) pour l'accrochage de l'autre (21) ossature, dite secondaire, sur ladite pince (140), **caractérisée par le fait que** la pince (140) comprend un étrier (150) et un levier (160), l'âme constituant le fond (143) de l'étrier (150) se prolongeant selon un retour (156) à 180 degrés, le fond (143) et le retour (156) étant munis d'ouvertures (157) en regard définissant le logement cylindrique et légèrement à distance l'un de l'autre, le levier (160) étant inséré dans l'intervalle ainsi défini et portant les moyens de maintien axial sur la tige filetée (30).

2. Pince selon la revendication 1, **caractérisée par le fait que** les moyens de maintien axial sur la tige filetée (30) comprennent une ouverture constituée d'un tronçon de mise en place (152) dans lequel la tige filetée (30) peut passer librement et un tronçon guillotine (153) débouchant dans le tronçon de mise en place (152) et de forme semi-circulaire selon un diamètre correspondant au diamètre à fond de filet de la tige filetée (30).

3. Pince selon l'une des revendications 1 ou 2, **caractérisée par le fait que** les ailes (145, 146) de l'étrier (150) constituent des pattes d'accrochage pour les fourrures (22) de l'ossature secondaire (21).

4. Pince selon l'une des revendications 1 à 3, **caractérisée par le fait que** l'étrier (150) et le levier (160) sont découpés dans un même flan et attachés l'un à l'autre jusqu'à mise en oeuvre de la pince (140).

5. Pince selon l'une des revendications 1 à 4, **caractérisée par le fait que** le levier (160) porte une patte (167) perpendiculaire à son plan.

6. Pince selon la revendication 5, **caractérisée par le fait que** le levier (160) présente deux bords droits (162, 163) globalement perpendiculaires reliés par un arrondi (161), et le retour (156) présente une tranche supérieure suivie d'un arrondi (144), lesdits arrondis étant adaptés à coopérer l'un (161) avec le fond (155) de la pliure du retour (156) et l'autre (144) avec la patte (167) perpendiculaire du levier (160).

7. Pince selon la revendication 6, **caractérisée par le fait que** l'arrondi (144) du retour (156) est suivi d'un bord libre (147) globalement parallèle au fond (155) de la pliure du retour (156), la patte (167) perpendiculaire du levier (160) étant adaptée à coopérer avec ce bord libre (147) en position de blocage.

8. Pince selon l'une des revendications 1 à 7, **caractérisée par le fait que** le levier (160) et l'étrier (150) portent des empreintes complémentaires (168, 158) mises en coïncidence dans la position de blocage du levier (160).

9. Dispositif de liaison, destiné à des fourrures (12, 22) appartenant à des ossatures différentes (11, 21) et comportant chacune deux ailes (14, 24) munies de retours (15, 25) en équerre dirigés l'un vers l'autre le long de leur bord libre, **caractérisé par le fait qu'**il comporte, en combinaison, d'une part, une tige filetée (30) adaptée à être solidarisée à l'une (11) des ossatures dite primaire et, d'autre part, une pince (140) selon l'une des revendications 1 à 8.

10. Dispositif de liaison selon la revendication 9, **caractérisé par le fait que** la tige filetée (30) est fixée à l'âme (32) d'un cavalier (31) en forme de U dont les ailes (33) sont agencées en sorte de pouvoir être assujetties aux fourrures (12) de l'ossature primaire (11).

## Patentansprüche

1. Klemme für eine Verbindungsvorrichtung für Komponenten (12, 22), die zu verschiedenen Stabwerken (11, 21) gehören und jeweils zwei Flügel (14, 24) umfassen, die mit rechtwinklig zurückspringenden Teilen (15, 25) versehen sind, die entlang ihres freien Randes einander zugewandt sind, wobei die Klemme eine zylindrische Aufnahme (157) aufweist, durch die sie auf eine Gewindestange (30) geschoben werden kann, die geeignet ist, mit dem einen (11) der Stabwerke, dem so genannten primären, fest verbunden zu werden, und die mit Mitteln zu seiner axialen Befestigung an der Gewindestange (30) versehen ist, wobei an der Klemme (140) Kopplungsmittel (145-146) vorgesehen sind, um das andere (21), so genannte sekundäre Stabwerk an die Klemme (140) anzukoppeln, **dadurch gekennzeichnet, dass** die Klemme (140) einen Bügel (150) und einen Hebel (160) umfasst, wobei der Steg, der den Boden (143) des Bügels (150) bildet, durch einen um 180 Grad zurückspringenden Teil (156) verlängert wird, wobei der Boden (143) und der zurückspringende Teil (156) mit einander gegenüberliegenden Öffnungen (157) versehen sind, die die zylindrische Aufnahme begrenzen und leicht voneinander beabstandet sind, wobei der Hebel (160) in den auf diese Weise begrenzten Zwischenraum eingefügt wird und die Mittel zur axialen Befestigung an der Gewindestange (30) trägt.

2. Klemme nach Anspruch 1, **dadurch gekennzeichnet, dass** die Mittel zur axialen Befestigung an der Gewindestange (30) eine Öffnung umfassen, die gebildet wird aus einem Anbringungsabschnitt (152), in dem sich die Gewindestange (30) frei bewegen kann, und einem einrastenden Abschnitt (153), der in den Anbringungsabschnitt (152) einmündet und eine halbkreisförmige Form aufweist, deren Durchmesser dem Durchmesser am Boden des Gewindes der Gewindestange (30) entspricht.

3. Klemme nach einem der Ansprüche 1 oder 2, **dadurch gekennzeichnet, dass** die Flügel (145, 146) des Bügels (150) Kopplungsklauen für die Komponenten (22) des sekundären Stabwerks (21) bilden.

4. Klemme nach einem der Ansprüche 1 bis 3, **dadurch gekennzeichnet, dass** der Bügel (150) und der Hebel (160) aus ein und derselben Platte geschnitten sind und bis zum Einsatz der Klemme (140) miteinander verbunden sind.

5. Klemme nach einem der Ansprüche 1 bis 4, **dadurch gekennzeichnet, dass** der Hebel (160) eine Klaue (167) trägt, die senkrecht zu seiner Ebene ist.

6. Klemme nach Anspruch 5, **dadurch gekennzeichnet, dass** der Hebel (160) zwei insgesamt senkrecht zueinander stehende gerade Ränder (162, 163) aufweist, die durch eine Rundung (161) miteinander verbunden sind, und dass der zurückspringende Teil (156) einen oberen Abschnitt aufweist, auf den eine Rundung (144) folgt, wobei die Rundungen so beschaffen sind, dass die eine (161) mit dem Boden (155) des Knicks des zurückspringenden Teils (156) und die andere (144) mit der senkrechten Klaue (167) des Hebels (160) zusammenarbeitet.

7. Klemme nach Anspruch 6, **dadurch gekennzeichnet, dass** auf die Rundung (144) des zurückspringenden Teils (156) ein freier Rand (147) folgt, der insgesamt parallel zum Boden (155) des Knicks des zurückspringenden Teils (156) ist, wobei die Klaue (167), die senkrecht zum Hebel (160) ist, geeignet ist, in der Blockierposition mit diesem freien Rand (147) zusammenzuarbeiten.

8. Klemme nach einem der Ansprüche 1 bis 7, **dadurch gekennzeichnet, dass** der Hebel (160) und der Bügel (150) komplementäre Vertiefungen (168, 158) tragen, die in der Blockierposition des Hebels (160) zusammentreffen.

9. Verbindungsvorrichtung für Komponenten (12, 22), die zu verschiedenen Stabwerken (11, 21) gehören und jeweils zwei Flügel (14, 24) umfassen, die mit rechtwinklig zurückspringenden Teilen (15, 25) versehen sind, die entlang ihres freien Randes einander zugewandt sind, **dadurch gekennzeichnet, dass** sie in Kombination umfasst: einerseits eine Gewindestange (30), die geeignet ist, mit dem einen (11) der Stabwerke, dem so genannten primären, fest verbunden zu werden, und andererseits eine Klemme (140) nach einem der Ansprüche 1 bis 8.

10. Verbindungsvorrichtung nach Anspruch 9, **dadurch gekennzeichnet, dass** die Gewindestange (30) am Steg (32) eines U-förmigen Reiters (31) befestigt ist, dessen Flügel (33) so ausgebildet sind, dass sie mit den Komponenten (12) des primären Stabwerks (11) verkeilt werden können.

## Claims

1. Clamp for a connecting device intended for brackets (12, 22) belonging to different frames (11, 21) and each comprising two wings (14, 24) provided with square returns (15, 25) directed towards each other along their free edge, the said clamp carrying a cylindrical housing (157) by means of which it can be slipped onto a threaded rod (30) adapted to be fixed to one (11) of the frames, referred to as the primary one, and being provided with means for its axial holding on the threaded rod (30), attachment means (145-146) being provided on the said clamp (140) for the attachment of the other (21) frame, referred to as the secondary one, on the said clamp (140), **characterised by** the fact that the clamp (140) comprises a plate (150) and a lever (160), the web constituting the bottom (143) of the plate (150) being extended along a return (156) at 180°, the bottom (143) and the return (156) being provided with facing openings (157) defining the cylindrical housing and slightly at a distance from each other, the lever (160) being inserted in the gap thus defined and carrying the means of axial holding on the threaded rod (30).

2. Clamp according to claim 1, **characterised by** the fact that the means of axial holding on the threaded rod (30) comprise an opening consisting of a positioning length (152) in which the threaded rod (30) can pass freely and a guillotine length (153) opening out in the positioning length (152) and with a semicircular shape along a diameter corresponding to the thread-root diameter of the threaded rod (30).

3. Clamp according to one of claims 1 or 2, **characterised by** the fact that the wings (145, 146) of the plate (150) constitute attachment lugs for the brackets (22) of the secondary frame (21).

4. Clamp according to one of claims 1 to 3, **characterised by** the fact that the plate (150) and the lever (160) are cropped from the same blank and attached to each other until the clamp (140) is used.

5. Clamp according to one of claims 1 to 4, **characterised by** the fact that the lever (160) carries a lug (167) perpendicular to its plane.

6. Clamp according to claim 5, **characterised by** the fact that the lever (160) has two roughly perpendicular straight edges (162, 163) connected by a rounded part (161), and the return (156) has a top edge followed by a rounded part (144), the said rounded parts being adapted to cooperate one (160) with the bottom (155) of the fold of the return (156) and the other (144) with the perpendicular lug (167) of the lever (160).

7. Clamp according to claim 6, **characterised by** the fact that the rounded part (144) of the return (156) is followed by a free edge (147) roughly perpendicular to the bottom (155) of the fold of the return (156), the perpendicular lug (167) of the lever (160) being adapted to cooperate with this free edge (147) in the locking position.

8. Clamp according to one of claims 1 to 7, **characterised by** the fact that the lever (160) and the clamp (150) carry complementary recesses (168, 158) coinciding in the locking position of the lever (160).

9. Connecting device intended for brackets (12, 22) belonging to different frames (11, 21) and each comprising two rings (14, 24) provided with square returns (15, 25) directed towards each other along their free edge, **characterised by** the fact that it comprises, in combination, firstly a threaded rod (30) adapted to be fixed to one (11) of the frames, referred to as the primary one, and secondly a clamp (140) according to one of claims 1 to 8.

10. Connecting device according to claim 9, **characterised by** the fact that the threaded rod (30) is fixed to the web (32) of a U-shaped link (31), the wings (33) of which are arranged so as to be able to be fixed to the brackets (12) of the primary frame (11).
